# EUROPEAN PATENT SPECIFICATION

(11) **EP 4 398 521 B1**
(45) Date of publication and mention of the grant of the patent: **21.05.2025**
(21) Application number: 23160905.8
(22) Date of filing: 09.03.2023
(51) Int. Cl.: H04L 12/10

(54) **NETWORK DEVICE FOR RESTORING POE OPERATION**
NETZWERKVORRICHTUNG ZUR WIEDERHERSTELLUNG DES POE-BETRIEBS
DISPOSITIF DE RÉSEAU POUR RESTAURER UNE OPÉRATION POE

(30) Priority: 05.01.2023 TW 112100370
(43) Date of publication of application: 10.07.2024
(73) Proprietor: Moxa Inc., New Taipei City 242 (TW)
(72) Inventor: Liu, Hsin-Hung, 242 New Taipei City (TW)
(74) Representative: Straus, Alexander

(56) References cited:
- US-A1- 2006 239 183
- US-A1- 2007 236 853
- US-A1- 2008 080 105

## Description

### Field of the Invention

The present invention is related to a network device capable of providing PoE power paths in the Ethernet mode without influencing its Ethernet communication.

### Background of the Invention

Power over Ethernet (PoE) describes any of several standards which pass electric power along with data on twisted-pair Ethernet cabling. This allows a single cable to provide both a data connection and enough electricity to power electronic devices such as voice over Internet Protocol (VoIP) phones, wireless access points (WAPs), Internet Protocol (IP) cameras or computers. Since PoE-capable devices can function without an electrical outlet, it can greatly simplify the amount and cost of infrastructure an organization has to manage. PoE technology is widely adopted in IP surveillance and remote-monitor applications. Because PoE cameras receive their power through an Ethernet cable, there's no need to install them near electrical outlets, which provides many practical advantages such as greater flexibility for camera placement, reduced maintenance, simpler management, lower installation cost, better scalability, better power reliability, better network reliability and increased system safety.

In US 2006/0239183 A1, a connection is maintained between a pair of Ethernet ports that have circuitry connected in series with the ports and receiving PoE from one of the ports, by providing a controllable bypass circuit coupled to the pair of Ethernet ports in parallel with the circuitry receiving PoE, sensing a preselected condition, and opening and closing the bypass circuit in response to the presence or absence of the preselected condition. Power sourcing equipment (PSE) may supply the one of the ports with PoE, and the circuitry may transports data between the pair of Ethernet ports. The circuitry may also supply the switch with a control signal in response to the detection of the preselected condition.

### Summary of the Invention

The present invention, which aims at providing a network device which restores the PoE operation, is defined in the appended independent claim 1 to which reference should be made. Advantageous features are set out in the appended dependent claims.

### Brief Description of the Drawings

In the following, the invention is further illustrated by way of example, taking reference to the accompanying drawings.
FIG. 1 is a functional diagram illustrating an existing PoE system.
FIG. 2A is a diagram illustrating an implementation and operation of a prior art network device capable of providing Ethernet bypass and PoE functions.
FIG. 2B is a diagram illustrating an implementation and operation of a prior art network device capable of providing Ethernet bypass and PoE functions.
FIG. 3A is a diagram illustrating an implementation of a network device capable of providing Ethernet bypass and PoE functions according to an embodiment of the present invention.
FIG. 3B is a diagram illustrating the first stage of restoring PoE operation by a network device according to an embodiment of the present invention.
FIG. 3C is a diagram illustrating the second stage of restoring PoE operation by a network device according to an embodiment of the present invention.
FIG. 3D is a diagram illustrating the third stage of restoring PoE operation by a network device according to an embodiment of the present invention.
FIG. 4 is a diagram illustrating related signals during the restoration of the PoE operation by a network device according to an embodiment of the present invention.'

### Detailed Description

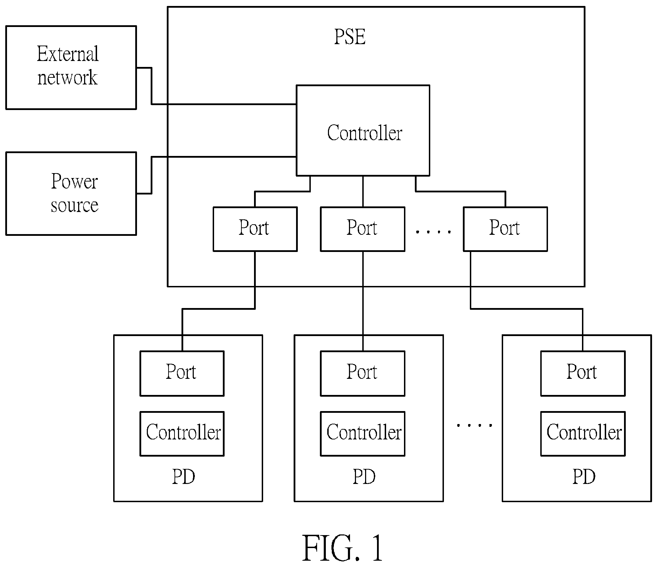

FIG. 1 is a functional diagram illustrating an existing PoE system. The PoE system normally includes one power sourcing equipment (PSE) and multiple powered devices (PDs) each including a controller and at least one port. The controller of the PSE is coupled to an external network, a power source and multiple ports. The external network can provide network data, and the power source can supply power to the PSE. Each port of the PSE is coupled to a port of a corresponding PD for transmitting power and network data to the corresponding PD. The controller of the PSE is configured to execute a specific power management algorithm so as to transmit the electricity received from the power source and the network data received from the external network by each port to a corresponding PD and calculate the remaining power quota of the PSE for determining whether there is sufficient electricity to power other PDs.

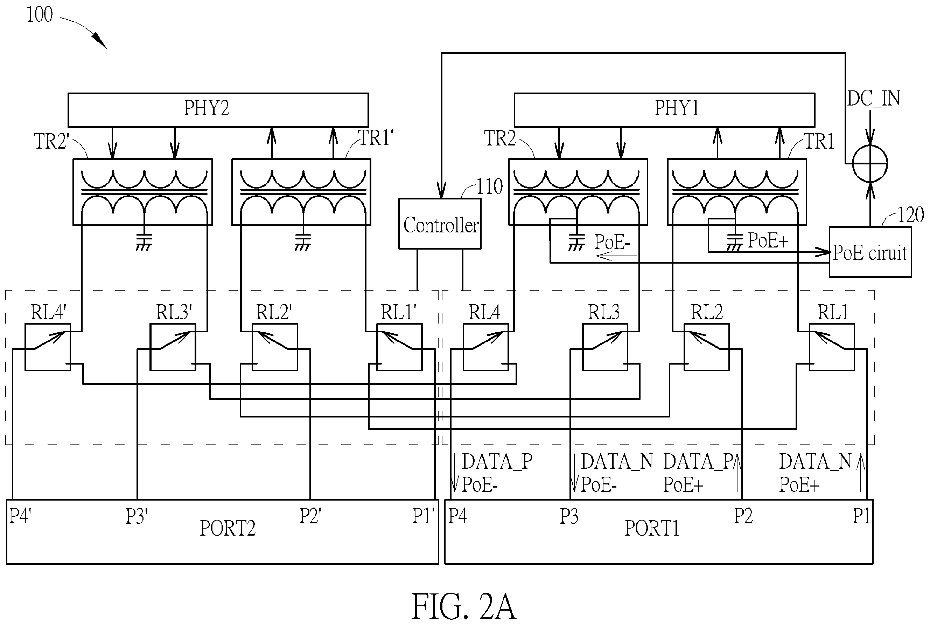

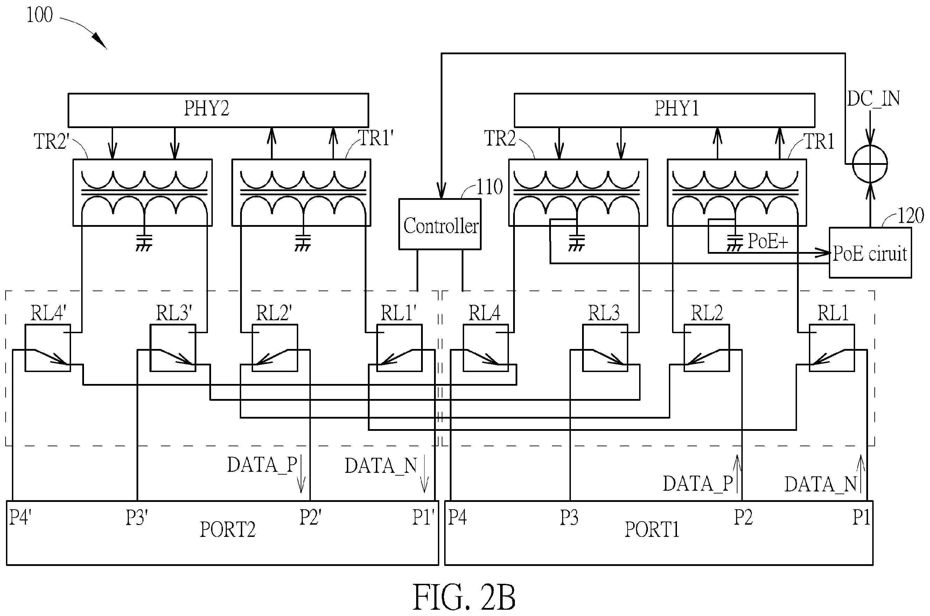

FIGs. 2A and 2B are diagrams illustrating an implementation and operation of a prior art network device 100 capable of providing Ethernet bypass and PoE functions. The network device 100 includes physical layer transceivers PHY1 and PHY2, network transformers TR1-TR2 and TR1'-TR2', a plurality of relays RL1-RL4 and RL1'-RL4', network ports PORT1 and PORT2, a controller 110, and a PoE powered circuit 120.

FIG. 2A is a diagram illustrating the operation of the prior art network device 100 in the normal mode. When the DC voltage DC_IN is normally supplied, the controller 110 is configured to operate in the normal mode and switch the relays RL1-RL4 and RL1'-RL4' to a normally-open state, wherein the common terminal (at the origin of the arrow symbol) each relay is coupled to its normally-open terminal (at the tip of the arrow symbol). Under such circumstance, the network port PORT1 is coupled to the network transformers TR1 and TR2, and the network port PORT2 is coupled to the network transformers TR1' and TR2'. Data signals DATA_N and DATA_P received by the pins P1 and P2 of the network PORT1 may be transmitted to the pins P3 and P4 of the network PORT1 sequentially via the relays RL1 and RL2, the network transformer TR1, the physical layer transceiver PHY1, the network transformer TR2, and the relays RL3 and RL4. The power signal PoE+ received via the pins P1 and P2 of the network PORT1 may be transmitted to the PoE powered circuit 120 sequentially via the relays RL1 and RL2 and the network transformer TR1, so that the PoE powered circuit 320 may provide the corresponding power signal PoE- which is transmitted to the pins P3 and P4 of the network PORT1 via the network transformer TR2 and the relays RL3/RL4.

FIG. 2B is a diagram illustrating the operation of the prior art network device 100 in the Ethernet bypass mode. When the supply of the DC voltage DC_IN is somehow interrupted, the controller 110 is unable to function normally, and the relays RL1-RL4 and RL1'-RL4' switches to a normally-closed state, wherein the common terminal (at the origin of the arrow symbol) each relay is coupled to its normally-closed terminal (at the tip of the arrow symbol). Under such circumstance, data signals DATA_N and DATA_P received by the pins P1 and P2 of the network PORT1 may be transmitted to the pins P1' and P2' of the network PORT2 sequentially via the relays RL1/RL2 and the relays RL1'/RL2'. However, the prior art network device 100 is unable to perform PoE operation in the Ethernet bypass mode since there is no transmission path for the power signal PoE+.

The purpose of the Ethernet bypass mode is to provide transmission path for data signals between two originally independent network ports when no power is supplied to the system. However, since each relay is unable switch its state without power supply, once the prior art network device 100 enters the Ethernet mode, it cannot be restarted via PoE operation in order to resume normal mode operation. Therefore, there is a need for a network device capable of providing PoE power paths in the Ethernet mode without influencing its Ethernet communication.

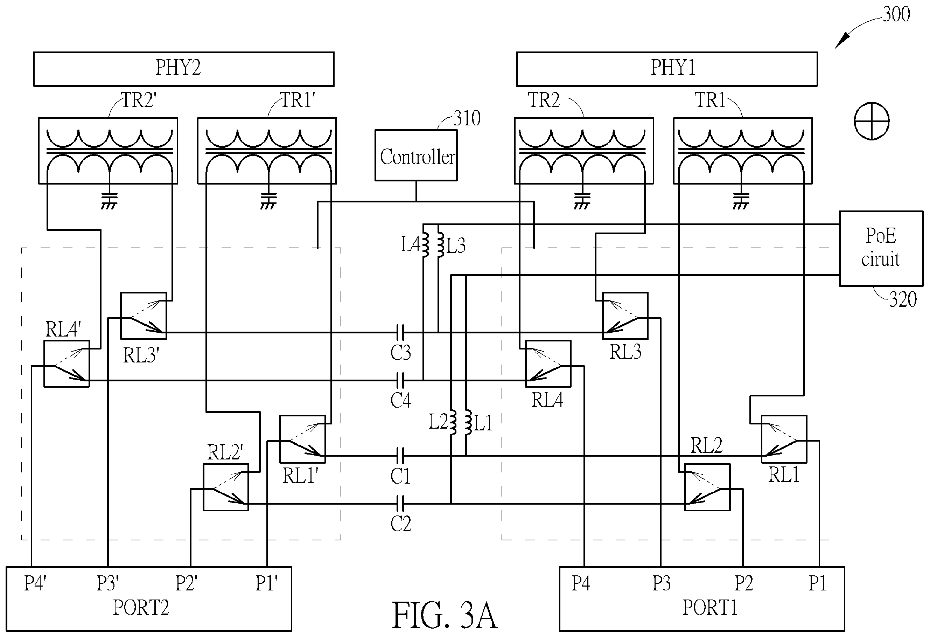

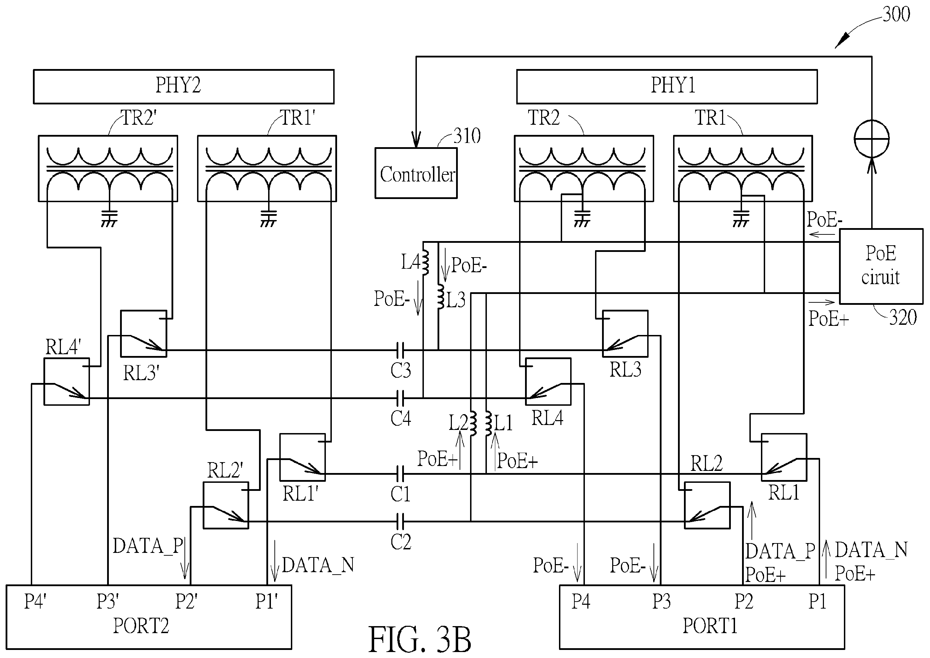

FIG. 3A is a diagram illustrating an implementation of a network device 300 capable of providing Ethernet bypass and PoE functions according to an embodiment of the present invention. FIGs. 3B-3D are diagrams illustrating the stages of restoring PoE operation by the network device 300 according to an embodiment of the present invention. The network device 300 may be a powered device in an Ethernet system and includes physical layer transceivers PHY1 and PHY2, network transformers TR1-TR2 and TR1'-TR2', relays RL1-RL4 and RL1'-RL4', network ports PORT1 and PORT2, inductors L1-L4, capacitors C1-C4, a controller 310, and a PoE circuit 320.

In the network device 300 depicted in FIG. 3B, the first terminal (the common terminal) of the relay RL1 is coupled to a first pin P1 of the network port PORT1, the second terminal (the normally-open terminal) of the relay RL1 is coupled to the network transformer TR1 and coupled to the PoE circuit 320 via the network transformer TR1, and the third terminal (the normally-closed terminal) of the relay RL1 is coupled to the capacitor C1 and the inductor L1. The first terminal (the common terminal) of the relay RL2 is coupled to a second pin P2 of the network port PORT1, the second terminal (the normally-open terminal) of the relay RL2 is coupled to the network transformer TR1 and coupled to the PoE circuit 320 via the network transformer TR1, and the third terminal (the normally-closed terminal) of the relay RL2 is coupled to the capacitor C2 and the inductor L2. The first terminal (the common terminal) of the relay RL3 is coupled to a third pin P3 of the network port PORT1, the second terminal (the normally-open terminal) of the relay RL3 is coupled to the network transformer TR2 and coupled to the PoE circuit 320 via the network transformer TR2, and the third terminal (the normally-closed terminal) of the relay RL3 is coupled to the capacitor C3 and the inductor L3. The first terminal (the common terminal) of the relay RL4 is coupled to a fourth pin P4 of the network port PORT1, the second terminal (the normally-open terminal) of the relay RL4 is coupled to the network transformer TR2 and coupled to the PoE circuit 320 via the network transformer TR2, and the third terminal (the normally-closed terminal) of the relay RL4 is coupled to the capacitor C4 and the inductor L4. The first terminal (the common terminal) of the relay RL1' is coupled to a first pin P1 of the network port PORT2, the second terminal (the normally-open terminal) of the relay RL1' is coupled to the network transformer TR1', and the third terminal (the normally-closed terminal) of the relay RL1' is coupled to the capacitor C1. The first terminal (the common terminal) of the relay RL2' is coupled to a second pin P2' of the network port PORT2, the second terminal (the normally-open terminal) of the relay RL2' is coupled to the network transformer TR1', and the third terminal (the normally-closed terminal) of the relay RL2' is coupled to the capacitor C2. The first terminal (the common terminal) of the relay RL3' is coupled to a third pin P3' of the network port PORT2, the second terminal (the normally-open terminal) of the relay RL3' is coupled to the network transformer TR2', and the third terminal (the normally-closed terminal) of the relay RL2' is coupled to the capacitor C3. The first terminal (the common terminal) of the relay RL4' is coupled to a fourth pin P4' of the network port PORT2, the second terminal (the normally-open terminal) of the relay RL4' is coupled to the network transformer TR2', and the third terminal (the normally-closed terminal) of the relay RL4' is coupled to the capacitor C4.

The first end of the inductor L1 is coupled to the third terminal of the relay RL1 and the first end of the capacitor C1, and the second end of the inductor L1 is coupled to the PoE circuit 320. The first end of the inductor L2 is coupled to the third terminal of the relay RL2 and the first end of the capacitor C2, and the second end of the inductor L2 is coupled to the PoE circuit 320. The first end of the inductor L3 is coupled to the third terminal of the relay RL3 and the first end of the capacitor C3, and the second end of the inductor L3 is coupled to the PoE circuit 320. The first end of the inductor L4 is coupled to the third terminal of the relay RL4 and the first end of the capacitor C4, and the second end of the inductor L1 is coupled to the PoE circuit 320. The first end of the capacitor C1 is coupled to the third terminal of the relay RL1, and the second end of the capacitor C1 is coupled to the third terminal of the relay RL1'. The first end of the capacitor C2 is coupled to the third terminal of the relay RL2, and the second end of the capacitor C2 is coupled to the third terminal of the relay RL2'. The first end of the capacitor C3 is coupled to the third terminal of the relay RL3, and the second end of the capacitor C3 is coupled to the third terminal of the relay RL3'. The first end of the capacitor C4 is coupled to the third terminal of the relay RL4, and the second end of the capacitor C4 is coupled to the third terminal of the relay RL4'.

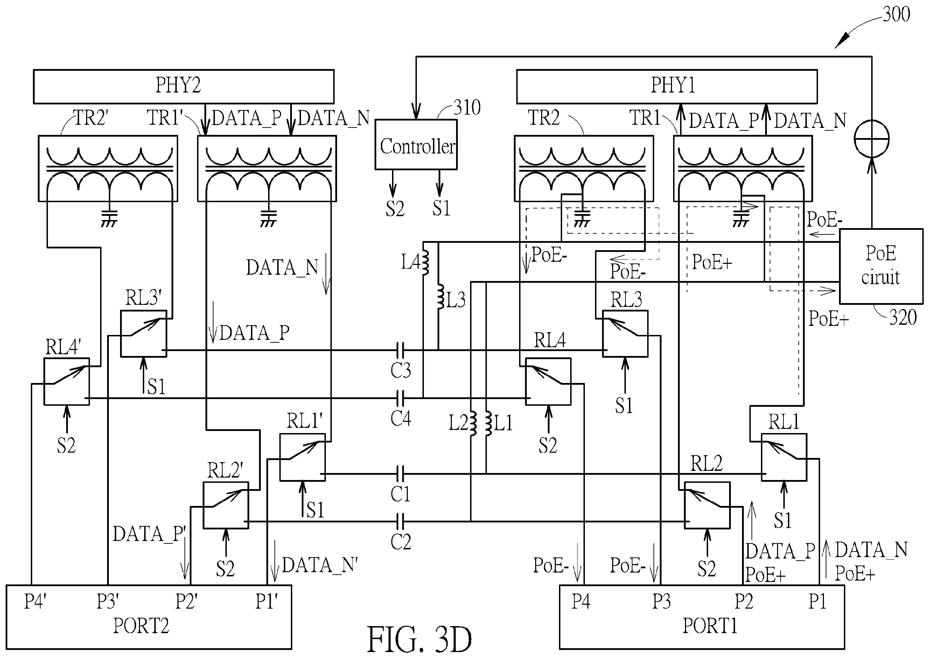

In the network device 300 depicted in FIG. 3B, each of the relays RL1-RL4 and RL1'-RL4' is configured to operate in a first state (i.e., the normally-open state) or in a second state (i.e., the normally-closed state). When a relay is operating in the first state, the signal transmission path between its first terminal and its second terminal is conducting, while the signal transmission path between its first terminal and its third terminal is cut off. When a relay is operating in the second state, the signal transmission path between its first terminal and its second terminal is cut off, while the signal transmission path between its first terminal and its third terminal is conducting. For example, when each of the relays RL1-RL4 and RL1'-RL4' is operating in the first state, the first pin P1 and the second pin P2 of the network port PORT1 may be coupled to the network transformer TR1, the third pin P3 and the fourth pin P4 of the network port PORT1 may be coupled to the network transformer TR2, the first pin P1' and the second pin P2' of the network port PORT2 may be coupled to the network transformer TR1', and the third pin P3' and the fourth pin P4' of the network port PORT2 may be coupled to the network transformer TR2', as depicted in FIG. 3D. When each of the relays RL1-RL4 and RL1'-RL4' is operating in the second state, the first pin P1 of the network port PORT1 may be coupled to the first pin P1' of the network port PORT2 via the capacitor C1, the second pin P2 of the network port PORT1 may be coupled to the second pin P2' of the network port PORT2 via the capacitor C2, the third pin P3 of the network port PORT1 may be coupled to the third pin P3' of the network port PORT2 via the capacitor C3, and the fourth pin P4 of the network port PORT1 may be coupled to the fourth pin P4' of the network port PORT2 via the capacitor C4, as depicted in FIG. 3B.

In order to better demonstrating the technical features of the present invention, FIGs. 3B-3D only depict the operational details associated with restoring PoE operation of the network port PORT1 when the network device 300 operates in the Ethernet bypass mode.

FIG. 3B depicts the first stage of restoring PoE operation by the network device 300 according to an embodiment of the present invention. When the supply of DC voltage DC_IN is somehow interrupted, the network device 300 is configured to operate in the Ethernet bypass mode, wherein the PoE circuit 320 is unable to supply power to the controller 310, and the controller 310 is thus turned off. In the Ethernet bypass mode when the controller 310 does not have any output, each of the relays RL1-RL4 and RL1'-RL4' is switched from the first state to the second state, thereby coupling the first pin P1 of the network PORT1 to the first pin P1' of the network PORT2 via the first terminal of the relay RL1, the third terminal of the relay RL1, the capacitor C1, the third terminal of the relay RL1' and the first terminal of the relay RL1', and coupling the second pin P2 of the network PORT1 to the second pin P2' of the network PORT2 via the first terminal of the relay RL2, the third terminal of the relay RL2, the capacitor C2, the third terminal of the relay RL2' and the first terminal of the relay RL2'. Under such circumstance, data signals DATA_N and DATA_P received by the first pin P1 and the second pin P2 of the network PORT1 may be transmitted to the first pin P1' and the second pin P2' of the network PORT2 sequentially via the relays RL1/RL2, the capacitors C1/C2 and the relays RL1'/RL2'.

Meanwhile, the first pin P1 of the network PORT1 is also coupled to the PoE circuit 320 via the first terminal of the relay RL1, the third terminal of the relay RL1 and the inductor L1, and the second pin P2 of the network PORT1 is also coupled to the PoE circuit 320 via the first terminal of the relay RL2, the third terminal of the relay RL2 and the inductor L2. Under such circumstance, the power signal PoE+ received by the first pin P1 and the second pin P2 of the network PORT1 may be transmitted to the PoE circuit 320 for powering up the PoE circuit 320. With the PoE circuit 320 supplying power to the controller 310, the controller is able to start normal operation. Also, the PoE circuit 320 may provide the corresponding power signal PoE- which is transmitted to the third pin P3 and the fourth pin P4 of the network PORT1 via the network transformer TR2 and the relays RL3/RL4. At this stage, the network device 300 can resume the PoE operation, while the data transmission remains in the bypass state.

In the present invention, when the network device 300 operates in the Ethernet bypass mode, circuit protection may be implemented by the capacitors C1-C4 by providing electrical signal isolation. By allowing AC data signals to pass and blocking DC data signals, the capacitors C1-C4 may prevent pin shortage between the network ports PORT1 and PORT2. For example, an electric shock may occur when a person comes into contact with the pins P1'-P4' of the network PORT2 with established voltages. The PoE operation may fail if the voltage surges of the electric shock reach the network port PORT1.

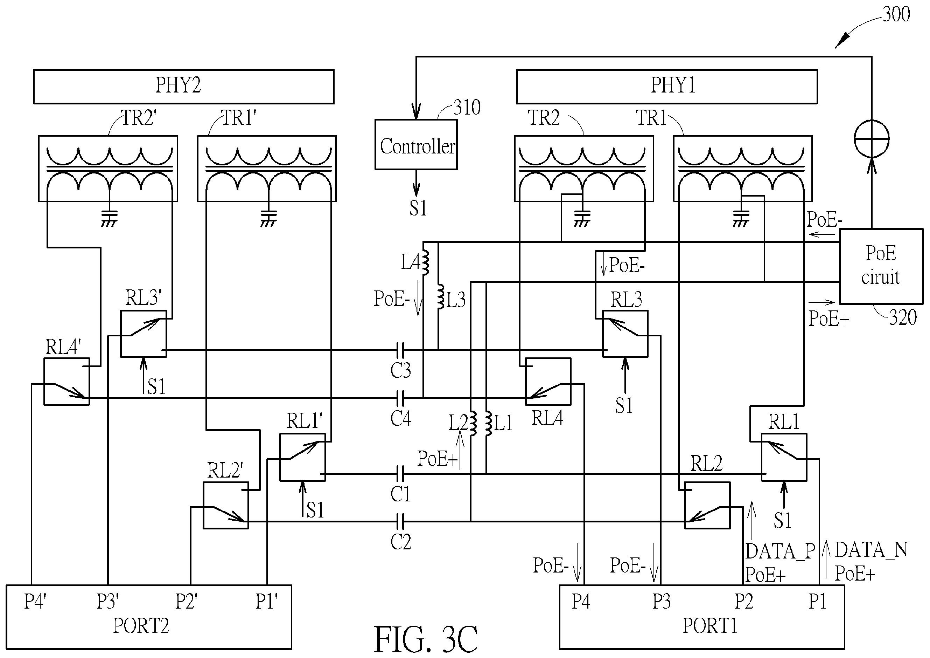

FIG. 3C depicts the second stage of restoring PoE operation by the network device 300 according to an embodiment of the present invention. After resuming normal operation, the controller 310 is configured to output a control signal S1 to the relays RL1, RL3, RL1' and RL3' at a first time point for switching the relays RL1, RL3, RL1' and RL3' from the second state to the first state, while the relays RL2, RL4, RL2' and RL4' remain in the second state. As a result, the first pin P1 of the network PORT1 may be coupled to the network transformer TR1 via the first terminal of the relay RL1 and the second terminal of the relay RL1, the third pin P3 of the network PORT1 may be coupled to the network transformer TR2 via the first terminal of the relay RL3 and the second terminal of the relay RL3, the first pin P1' of the network PORT2 may be coupled to the network transformer TR1' via the first terminal of the relay RL1' and the second terminal of the relay RL1', and the third pin P3' of the network PORT2' may be coupled to the network transformer TR2' via the first terminal of the relay RL3' and the second terminal of the relay RL3'. Under such circumstance, since the relays RL1 and RL2 are in different states, data transmission is terminated because the data signal DATA_N received by the first pin P1 of the network PORT1 and the data signal DATA_P received by the second pin P2 of the network PORT1 cannot be transmitted to the same destination. Meanwhile, the power signal PoE+ received by the first pin P1 and the second pin P2 of the network PORT1 may be transmitted to the PoE circuit 320 not only via the inductor L2, but also via the relay RL1 and the network transformer TR1 for powering up the PoE circuit 320. Therefore, the PoE circuit 320 may provide the corresponding power signal PoE- which is transmitted to the third pin P3 of the network PORT1 via the network transformer TR2 and the relay RL3 and transmitted to the fourth pin P4 of the network PORT 1 via the inductor L4 and the relay RL4. At this stage, the network device 300 can continue to perform the PoE operation, while the data transmission is terminated.

FIG. 3D depicts the third stage of restoring PoE operation by the network device 300 according to an embodiment of the present invention. After outputting the control signal S1, the controller 310 is configured to output a control signal S2 to the relays RL2, RL4, RL2' and RL4' at a second time point for switching the relays RL2, RL4, RL2' and RL4' from the second state to the first state. As a result, the first pin P1 of the network PORT1 may be coupled to the network transformer TR1 via the first terminal of the relay RL1 and the second terminal of the relay RL1, the second pin P2 of the network PORT1 may be coupled to the network transformer TR1 via the first terminal of the relay RL2 and the second terminal of the relay RL2, the third pin P3 of the network PORT1 may be coupled to the network transformer TR2 via the first terminal of the relay RL3 and the second terminal of the relay RL3, the fourth pin P4 of the network PORT1 may be coupled to the network transformer TR2 via the first terminal of the relay RL4 and the second terminal of the relay RL4, the first pin P1' of the network PORT2 may be coupled to the network transformer TR1' via the first terminal of the relay RL1' and the second terminal of the relay RL1', the second pin P2' of the network PORT2 may be coupled to the network transformer TR1' via the first terminal of the relay RL2' and the second terminal of the relay RL2', the third pin P3' of the network PORT2 may be coupled to the network transformer TR2' via the first terminal of the relay RL3' and the second terminal of the relay RL3', and the fourth pin P4' of the network PORT2 may be coupled to the network transformer TR2' via the first terminal of the relay RL4' and the second terminal of the relay RL4'. Under such circumstance, the data signal DATA_N received by the first pin P1 of the network PORT1 may be transmitted to a processor (not shown in FIGs. 3A-3D) via the relay RL1, the network transformer TR1 and the physical layer transceiver PHY1 for subsequent data processing, and the data signal DATA_P received via the second pin P2 of the network PORT1 may be transmitted to a processor (not shown in FIGs. 3A-3D) via the relay RL2, the network transformer TR1 and the physical layer transceiver PHY1 for subsequent data processing. Meanwhile, the power signal PoE+ received by the first pin P1 and the second pin P2 of the network PORT1 may be transmitted to the PoE circuit 320 via the relays RL1/RL2 and the network transformer TR1 for powering up the PoE circuit 320. Therefore, the PoE circuit 320 may provide the corresponding power signal PoE- which is transmitted to the third pin P3 and the fourth pin P4 of the network PORT1 via the network transformer TT2 and the relays RL3/RL4. At this stage, the network device 300 can continue to perform the PoE operation, and the data transmission is resumed.

In the present invention, when the network device 300 operates in the Ethernet bypass mode, the signal transmission paths provided by the inductors L1-L4 include the relays RL1-RL4 and are thus influenced by the sequence of switching the states of the relays RL1-RL4. For example, if the controller 310 outputs the control signals S1 and S2 at the same time, a sudden open circuit occurs at the moment when the relays RL1-RL4 simultaneously switch from the second state to the first state, thereby cutting off the transmission paths of the power signals and affecting the stability of the PoE operation. Therefore, in the embodiments illustrated in FIG. 3C-3D, the second time point occurs later than the first time point. More specifically, the controller 310 is configured to first output the control signal S1 for switching the relays RL1 and RL3 from the second state to the first state (restoring partial PoE operation), and then output the control signal S2 for switching the relays RL2 and RL4 from the second state to the first state (restoring full PoE operation), thereby preventing a sudden open circuit during relay switching from cutting off the transmission path of the power signals. In another embodiment, each of the relays R1-R4 may be controlled by an individual control signal for switching its operational state, but not limited thereto. In the multi-relay structure, the state of each relay associated with the same power polarity (PoE+ or PoE-) is switched on a non-simultaneous basis in the present invention in order to ensure the stability of the PoE operation.

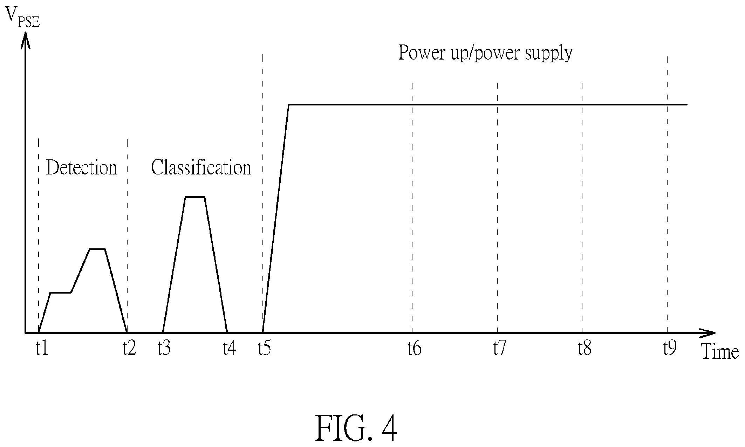

FIG. 4 is a diagram illustrating related signals during the restoration of the PoE operation by the network device 300 according to an embodiment of the present invention. In FIG.4, the vertical axis represents the voltage V_{PSE} of power source equipment (PSE), and the horizontal axis represents time. The PoE operation typically includes a detection period, a classification period and a power up/power supply period. During the detection period between t1 and t2, after the PSE is inserted into the network port PORT1 of the network device 300, a voltage pulse of around 2-10V may be generated for detecting whether a powered device (PD) connected to the network port PORT2 of the network device 300 is compatible with IEEE power delivery standards. During the classification period between t3 and t4, after confirming that the PD connected to the network port PORT2 of the network device 300 is compatible with IEEE power delivery standards, the PSE may apply a detecting voltage of around 15.5-20.5V for testing the power level of the PD since different types of PDs have different power ratings. After the detection period and the classification period, the PoE operation may be performed during the power up/power supply period between t6 and t9, wherein the period between t5 and t6 corresponds to the first stage of restoring the PoE operation depicted in FIG. 3B, the period between t6 and t7 corresponds to the second stage of restoring the PoE operation depicted in FIG. 3C, and the period between t7 and t9 corresponds to the third stage of restoring the PoE operation depicted in FIG. 3D.

In the present invention, when the network device 300 is restoring the PoE operation in the Ethernet bypass mode, the states of the relays are switched sequentially from the second state to the first state instead of simultaneously. Therefore, the present device 300 is able to maintain the transmission paths for power signals, thereby providing stable power supply during the power up/power supply period, as depicted by t5-t9.

In an embodiment, when determining that the DC voltage DC_IN is not supplied normally, the controller 310 is configured to instruct the network device 300 to operate in the Ethernet bypass mode and restore the PoE operation in the Ethernet bypass mode in the method depicted in FIGs. 3B-3C. In another embodiment, the network device 300 may further include a watchdog timer, and the controller 310 is configured to periodically send an impulse signal to rest the watchdog timer. If the controller 310 is somehow unable to function normally and thus fails to send the impulse signal, the watchdog timer is configured to send a bypass signal when expired (i.e., timeout) so as to instruct the network device 300 to operate in the Ethernet bypass mode (i.e., the relays are switched from the first mode to the second mode).

In an embodiment of the present invention, the controller 310 may be a central processing unit (CPU), a microprocessor, an application-specific integrated circuit (ASIC) or a system on a chip (SOC). The controller 310 may include delay circuits and logic circuits for switching the states of the relays in a sequential manner. However, the implementation of the controller 310 does not limit the scope of the present invention.

In an embodiment of the present invention, each of the physical layer transceivers PHY1 and PHY2 may be an Ethernet physical layer defined in IEEE-802.3 standard and including a media independent interface (MII) sub-layer, a physical coding sub-layer (PCS), a physical medium attachment (PMA) sub-layer, a physical medium dependent (PMD) sub-layer, and a medium dependent interface (MDI) sub-layer. However, the implementation of the physical layer transceivers PHY1 and PHY2 does not limit the scope of the present invention.

In an embodiment of the present invention, each of the network ports PORT1 and PORT2 may be an RJ45 connector. However, the implementation of the network ports PORT1 and PORT2 does not limit the scope of the present invention.

In an embodiment of the present invention, the network device 300 may be an Ethernet powered device such as an Ethernet switch, an Ethernet hub, or an Ethernet injector. However, the type of the network device 300 does not limit the scope of the present invention.

In conclusion, the present invention provides a network device capable of providing Ethernet bypass and PoE functions. After the network device enters the Ethernet mode by switching the states of its relays, the PoE operation may be restored by providing transmission paths for power signals using inductors. As well known to those skilled in the art, an inductor is equivalent to a short circuit to DC current and exhibit higher impedance to AC signals, thereby allowing DC power signals to pass without changing the characteristics of AC data signals. Therefore, the present invention can provide a network device capable of providing PoE power paths in the Ethernet mode without influencing its Ethernet communication.

## Claims

1. A network device (300) for restoring Power over Ethernet, PoE, operation, comprising:
a first network port (PORT1) which includes a first pin (P1), a second pin (P2), a third pin (P3) and a fourth pin (P4);
a PoE circuit (320) configured to supply power after receiving a first power signal (PoE+) via the first network port (PORT1) in an Ethernet bypass mode in which a transmission path for data signals is provided between the first network port (PORT1) and another independent network port when no power is supplied to the network device (300);
a first network transformer (TR1);
a second network transformer (TR2);
a first relay (RL1) coupled to the first network transformer (TR1) and the first network port (PORT1), and including:
a first terminal coupled to the first pin (P1);
a second terminal coupled to the first network transformer (TR1); and
a third terminal;
a second relay (RL2) coupled to the first network transformer (TR1) and the first network port (PORT1), and including:
a first terminal coupled to the second pin (P2);
a second terminal coupled to the first network transformer (TR1); and
a third terminal;
a third relay (RL3) coupled to the second network transformer (TR2) and the first network port (PORT1), and including:
a first terminal coupled to the third pin (P3);
a second terminal coupled to the second network transformer (TR2); and
a third terminal; and
a fourth relay (RL4) coupled to the second network transformer (TR2) and the first network port (PORT1), and including:
a first terminal coupled to the fourth pin (P4);
a second terminal coupled to the second network transformer (TR2); and
a third terminal;
a first inductor (L1) coupled to the first relay (RL1) and the PoE circuit (320) and configured to transmit the first power signal (PoE+) received by the first network port (PORT1) to the PoE circuit (320);
a second inductor (L2) coupled to the second relay (RL2) and the PoE circuit (320) and configured to transmit the first power signal (PoE+) received by the first network port (PORT1) to the PoE circuit (320);
a third inductor (L3) coupled to the third relay (RL3) and the PoE circuit (320) and configured to transmit a second power signal (PoE-) provided by the PoE circuit (320) to the first network port (PORT1);
a fourth inductor (L4) coupled to the fourth relay (RL4) and the PoE circuit (320) and configured to transmit the second power signal (PoE-) provided by the PoE circuit (320) to the first network port (PORT1); and
a controller (310) configured to switch operational states of the first through the fourth relays (RL1-RL4) when supplied by the PoE circuit (320) in the Ethernet bypass mode, wherein after the first power signal (PoE+) received by the first network port (PORT1) is transmitted to the PoE circuit (320) via the first inductor (L1) and the second inductor (L2) when the first through the fourth relays (RL1-RL4) are in the second state so that the PoE circuit (320) starts to supply power to the controller (310), the controller (310) is further configured to:
output a first control signal (S1) to the first relay (RL1) at a first time point for switching the first relay (RL1) to the first state;
output the first control signal (S1) to the third relay (RL3) at the first time point for switching the third relay (RL3) to the first state;
output a second control signal (S2) to the second relay (RL2) at a second time point for switching the second relay (RL2) to the first state; and
output the second control signal (S2) to the fourth relay (RL4) at the second time point for switching the fourth relay (RL4) to the first state, wherein the second time point occurs later than the first time point.

2. The network device (300) of claim 1, wherein
the controller (110, 310) is further configured to output a first control signal (S1) to the first relay (RL1) and the third relay (RL3) and output a second control signal (S2) to the second relay (RL2) and the fourth relay (RL4) when supplied by the PoE circuit (320) in the Ethernet bypass mode;
the first relay (RL1) is configured to:
operate in a first state when receiving the first control signal (S1) so as to couple the first end of the first relay (RL1) to the second end of the first relay (RL1); and
operate in a second state when not receiving the first control signal (S1) so as to couple the first end of the first relay (RL1) to the third end of the first relay (RL1);
the second relay (RL2) is configured to:
operate in the first state when receiving the second control signal (S2) so as to couple the first end of the second relay (RL2) to the second end of the second relay (RL2); and
operate in the second state when not receiving the second control signal (S2) so as to couple the first end of the second relay (RL2) to the third end of the second relay (RL2);
the third relay (RL3) is configured to:
operate in the first state when receiving the first control signal (S1) so as to couple the first end of the third relay (RL3) to the second end of the third relay (RL3); and
operate in the second state when not receiving the first control signal (S1) so as to couple the first end of the third relay (RL3) to the third end of the third relay (RL3);
the fourth relay (RL4) is configured to:
operate in the first state when receiving the second control signal (S2) so as to couple the first end of the fourth relay (RL4) to the second end of the fourth relay (RL4); and
operate in the second state when not receiving the second control signal (S2) so as to couple the first end of the fourth relay (RL4) to the third end of the fourth relay (RL4); and
the first relay (RL1), the second relay (RL2), the third relay (RL3) and the fourth relay (RL4) are configured to operate in the second state in the Ethernet bypass mode.

3. The network device (300) of any of claims 1-2, wherein
the first inductor (L1) includes:
a first end coupled to the third terminal of the first relay (RL1); and
a second end coupled to the PoE circuit (320);
the second inductor (L2) includes:
a first end coupled to the third terminal of the second relay (RL2); and
a second end coupled to the PoE circuit (320);
the third inductor (L3) includes:
a first end coupled to the third terminal of the third relay (RL3); and
a second end coupled to the PoE circuit (320); and
the fourth inductor (L4) includes:
a first end coupled to the third terminal of the fourth relay (RL4); and
a second end coupled to the PoE circuit (320).

4. The network device (300) of claim 1, wherein
the first power signal (PoE+) received by the first network port (PORT1) is transmitted to the PoE circuit (320) further sequentially via the first terminal of the first relay (RL1), the second terminal of the first relay (RL1) and the first network transformer (TR1) between the first time point and the second time point so that the PoE circuit (320) supplies the second power signal (PoE-) accordingly; and
the second power signal (PoE-) is transmitted to the third pin (P3) of the first network port (PORT1) sequentially via the second network transformer (TR2), the second terminal of the third relay (RL3) and the first terminal of the third relay (RL3) between the first time point and the second time point.

5. The network device (300) of claim 4, wherein
the first power signal (PoE+) received by the first network port (PORT1) is transmitted to the PoE circuit (320) further via the first relay (RL1),
the second relay (RL2) and the first network transformer (TR1) after the second time point so that the PoE circuit (320) supplies the second power signal (PoE-) accordingly; and
the second power signal (PoE-) is transmitted to the first network port (PORT1) via the second network transformer (TR2), the third relay (RL3) and the fourth relay (RL4) after the second time point.

6. The network device (300) of any of claims 1-5, **further** comprising:
a second network port (PORT2) which includes a fifth pin (P1'), a sixth pin (P2'), a seventh pin (P3') and an eighth pin (P4');
a third network transformer (TR1');
a fourth network transformer (TR2');
a fifth relay (RL1') including:
a first terminal coupled to the fifth pin (P1');
a second terminal coupled to the third network transformer (TR1'); and
a third terminal;
a sixth relay (RL2') including:
a first terminal coupled to the sixth pin (P2');
a second terminal coupled to the third network transformer (TR1'); and
a third terminal;
a seventh relay (RL3') including:
a first terminal coupled to the seventh pin (P3');
a second terminal coupled to the fourth network transformer (TR2'); and
a third terminal; and
an eighth relay (RL4') including:
a first terminal coupled to the eighth pin (P4');
a second terminal coupled to the fourth network transformer (TR2'); and
a third terminal.
a first capacitor (C1) coupled between the third terminal of the first relay (RL1) and the third terminal of the fifth relay (RL1');
a second capacitor (C2) coupled between the third terminal of the second relay (RL2) and the third terminal of the sixth relay (RL2');
a third capacitor (C3) coupled between the third terminal of the third relay (RL3) and the third terminal of the seventh relay (RL3'); and
a fourth capacitor (C4) coupled between the third terminal of the fourth relay (RL4) and the third terminal of the eighth relay (RL4').

7. The network device (300) of claim 6, wherein
a first data signal (DATA_N) received by the first pin (P1) of the first network port (PORT1) is transmitted to the fifth pin (P1') of the second network port (PORT2) sequentially via the first terminal of the first relay (RLl), the third terminal of the first relay (RLl), the first capacitor (C1), the third terminal of the fifth relay (RLl') and the first terminal of the fifth relay (RLl') when the first through the fourth relays (RL1-RL4) are in the second state; and
a second data signal (DATA_P) received by the second pin (P2) of the first network port (PORT1) is transmitted to the sixth pin (P2') of the second network port (PORT2) sequentially via the first terminal of the second relay (RL2), the third terminal of the second relay (RL2), the second capacitor (C2), the third terminal of the sixth relay (RL2') and the first terminal of the sixth relay (RL2') when the first through the fourth relays (RL1-RL4) are in the second state.

8. The network device (300) of any of claims 1-7, further **comprising:**
a timer configured to output a bypass signal after the timer expires so as to instruct the network device (300) to operate in the Ethernet bypass mode, wherein the controller (310) is further configured to periodically rest the timer in order to prevent the timer from expiring.

## Patentansprüche

1. Netzwerkvorrichtung (300) zur Wiederherstellung des *Power-over-Ethernet-,* PoE, Betriebes, welche umfasst:
einen ersten Netzwerkanschluss (PORT1), der einen ersten Stift (P1), einen zweiten Stift (P2), einen dritten Stift (P3) und einen vierten Stift (P4) umfasst;
eine PoE-Schaltung (320), die konfiguriert ist, nach dem Empfang eines ersten Energiesignals (PoE+) über den ersten Netzwerkanschluss (PORT1) in einem *Ethernet-Bypass*-Modus, in dem ein Übertragungspfad für Datensignale zwischen dem ersten Netzwerkanschluss (PORT1) und einem anderen unabhängigen Netzwerkanschluss bereitgestellt wird, wenn der Netzwerkvorrichtung (300) keine Energie zugeführt wird, Energie zu liefern;
einen ersten Netzwerktransformator (TR1);
einen zweiten Netzwerktransformator (TR2);
ein erstes Relais (RL1), das mit dem ersten Netzwerktransformator (TR1) und dem ersten Netzwerkanschluss (PORT1) gekoppelt ist und umfasst:
einen ersten Anschluss, der mit dem ersten Stift (P1) gekoppelt ist;
einen zweiten Anschluss, der mit dem ersten Netzwerktransformator (TR1) gekoppelt ist; und
einen dritten Anschluss;
ein zweites Relais (RL2), das mit dem ersten Netzwerktransformator (TR1) und dem ersten Netzwerkanschluss (PORT1) gekoppelt ist, und umfasst:
einen ersten Anschluss, der mit dem zweiten Stift (P2) gekoppelt ist;
einen zweiten Anschluss, der mit dem ersten Netzwerktransformator (TR1) gekoppelt ist; und
einen dritten Anschluss;
ein drittes Relais (RL3), das mit dem zweiten Netzwerktransformator (TR2) und dem ersten Netzwerkanschluss (PORT1) gekoppelt ist, und umfasst:
einen ersten Anschluss, der mit dem dritten Stift (P3) gekoppelt ist;
einen zweiten Anschluss, der mit dem zweiten Netzwerktransformator (TR2) gekoppelt ist; und
einen dritten Anschluss; und
ein viertes Relais (RL4), das mit dem zweiten Netzwerktransformator (TR2) und dem ersten Netzwerkanschluss (PORT1) gekoppelt ist und umfasst:
einen ersten Anschluss, der mit dem vierten Stift (P4) gekoppelt ist;
einen zweiten Anschluss, der mit dem zweiten Netzwerktransformator (TR2) gekoppelt ist; und
einen dritten Anschluss;
eine erste Induktivität (L1), die mit dem ersten Relais (RL1) und der PoE-Schaltung (320) gekoppelt ist und konfiguriert ist, das erste Leistungssignal (PoE+), das von dem ersten Netzwerkanschluss (PORT1) empfangen wird, an die PoE-Schaltung (320) zu übertragen;
eine zweite Induktivität (L2), die mit dem zweiten Relais (RL2) und der PoE-Schaltung (320) gekoppelt und konfiguriert ist, das erste Leistungssignal (PoE+), das von dem ersten Netzwerkanschluss (PORT1) empfangen wird, an die PoE-Schaltung (320) zu übertragen;
eine dritte Induktivität (L3), die mit dem dritten Relais (RL3) und der PoE-Schaltung (320) gekoppelt und konfiguriert ist, ein zweites Leistungssignal (PoE-), das von der PoE-Schaltung (320) bereitgestellt wird, an den ersten Netzwerkanschluss (PORT1) zu übertragen;
eine vierte Induktivität (L4), die mit dem vierten Relais (RL4) und der PoE-Schaltung (320) gekoppelt und konfiguriert ist, das zweite Leistungssignal (PoE-), das von der PoE-Schaltung (320) bereitgestellt wird, an den ersten Netzwerkanschluss (PORT1) zu übertragen; und
eine Steuerung (310), die konfiguriert ist, die Betriebszustände des ersten bis vierten Relais (RL1-RL4) umzuschalten, wenn sie von der PoE-Schaltung (320) im Ethernet-Bypass-Modus versorgt wird, wobei, nachdem das erste Stromsignal (PoE+), das von dem ersten Netzwerkanschluss (PORT1) empfangen wird, über die erste Induktivität (L1) und die zweite Induktivität (L2) an die PoE-Schaltung (320) übertragen wird, wenn sich das erste bis vierte Relais (RL1-RL4) in dem zweiten Zustand befinden, so dass die PoE-Schaltung (320) beginnt, Strom an die Steuerung (310) zu liefern, die Steuerung (310) ferner konfiguriert ist, um:
ein erstes Steuersignal (S1) an das erste Relais (RL1) zu einem ersten Zeitpunkt auszugeben, um das erste Relais (RL1) in den ersten Zustand zu schalten;
das erste Steuersignal (S1) an das dritte Relais (RL3) zu dem ersten Zeitpunkt auszugeben, um das dritte Relais (RL3) in den ersten Zustand zu schalten;
das zweite Steuersignal (S2) an das zweite Relais (RL2) zu einem zweiten Zeitpunkt auszugeben, um das zweite Relais (RL2) in den ersten Zustand zu schalten; und
das zweite Steuersignal (S2) an das vierte Relais (RL4) zu dem zweiten Zeitpunkt auszugeben, um das vierte Relais (RL4) in den ersten Zustand zu schalten, wobei der zweite Zeitpunkt später als der erste Zeitpunkt eintritt.

2. Netzwerkvorrichtung (300) nach Anspruch 1, wobei
die Steuerung (110, 310) ferner konfiguriert ist, ein erstes Steuersignal (S1) an das erste Relais (RL1) und das dritte Relais (RL3) auszugeben und ein zweites Steuersignal (S2) an das zweite Relais (RL2) und das vierte Relais (RL4) auszugeben, wenn sie von der PoE-Schaltung (320) im *Ethernet-Bypass*-Modus versorgt wird;
das erste Relais (RL1) konfiguriert ist, um:
in einem ersten Zustand zu arbeiten, wenn es das erste Steuersignal (S1) empfängt, um das erste Ende des ersten Relais (RL1) mit dem zweiten Ende des ersten Relais (RL1) zu koppeln; und
in einem zweiten Zustand zu arbeiten, wenn es das erste Steuersignal (S1) nicht empfängt, um das erste Ende des ersten Relais (RL1) mit dem dritten Ende des ersten Relais (RL1) zu koppeln;
das zweite Relais (RL2) konfiguriert ist, um:
in dem ersten Zustand zu arbeiten, wenn es das zweite Steuersignal (S2) empfängt, um das erste Ende des zweiten Relais (RL2) mit dem zweiten Ende des zweiten Relais (RL2) zu koppeln; und
in dem zweiten Zustand zu arbeiten, wenn es das zweite Steuersignal (S2) nicht empfängt, um das erste Ende des zweiten Relais (RL2) mit dem dritten Ende des zweiten Relais (RL2) zu koppeln;
das dritte Relais (RL3) konfiguriert ist, um:
in dem ersten Zustand zu arbeiten, wenn es das erste Steuersignal (S1) empfängt, um das erste Ende des dritten Relais (RL3) mit dem zweiten Ende des dritten Relais (RL3) zu koppeln; und
in dem zweiten Zustand arbeiten, wenn es das erste Steuersignal (S1) nicht empfängt, um das erste Ende des dritten Relais (RL3) mit dem dritten Ende des dritten Relais (RL3) zu koppeln;
das vierte Relais (RL4) konfiguriert ist, um:
im ersten Zustand zu arbeiten, wenn es das zweite Steuersignal (S2) empfängt, um das erste Ende des vierten Relais (RL4) mit dem zweiten Ende des vierten Relais (RL4) zu koppeln; und
im zweiten Zustand zu arbeiten, wenn es das zweite Steuersignal (S2) nicht empfängt, um das erste Ende des vierten Relais (RL4) mit dem dritten Ende des vierten Relais (RL4) zu koppeln; und
das erste Relais (RL1), das zweite Relais (RL2), das dritte Relais (RL3) und das vierte Relais (RL4) konfiguriert sind, im *Ethernet-Bypass*-Modus in dem zweiten Zustand zu arbeiten.

3. Netzwerkvorrichtung (300) nach einem der Ansprüche 1-2, wobei
die erste Induktivität (L1) umfasst:
ein erstes Ende, das mit dem dritten Anschluss des ersten Relais (RL1) gekoppelt ist; und
ein zweites Ende, das mit der PoE-Schaltung (320) gekoppelt ist;
die zweite Induktivität (L2) umfasst:
ein erstes Ende, das mit dem dritten Anschluss des zweiten Relais (RL2) gekoppelt ist; und
ein zweites Ende, das mit der PoE-Schaltung (320) gekoppelt ist;
die dritte Induktivität (L3) umfasst:
ein erstes Ende, das mit dem dritten Anschluss des dritten Relais (RL3) gekoppelt ist; und
ein zweites Ende, das mit der PoE-Schaltung (320) gekoppelt ist; und
die vierte Induktivität (L4) umfasst:
ein erstes Ende, das mit dem dritten Anschluss des vierten Relais (RL4) gekoppelt ist; und
ein zweites Ende, das mit der PoE-Schaltung (320) gekoppelt ist.

4. Netzwerkvorrichtung (300) nach Anspruch 1, wobei
das von dem ersten Netzwerkanschluss (PORT1) empfangene erste Leistungssignal (PoE+) an die PoE-Schaltung (320) weiter sequentiell über den ersten Anschluss des ersten Relais (RL1), den zweiten Anschluss des ersten Relais (RL1) und den ersten Netzwerktransformator (TR1) zwischen dem ersten Zeitpunkt und dem zweiten Zeitpunkt übertragen wird, so dass die PoE-Schaltung (320) das zweite Leistungssignal (PoE-) entsprechend liefert; und
das zweite Leistungssignal (PoE-) zwischen dem ersten Zeitpunkt und dem zweiten Zeitpunkt sequentiell über den zweiten Netzwerktransformator (TR2), den zweiten Anschluss des dritten Relais (RL3) und den ersten Anschluss des dritten Relais (RL3) an den dritten Stift (P3) des ersten Netzwerkanschlusses (PORT1) übertragen wird.

5. Netzwerkvorrichtung (300) nach Anspruch 4, wobei
das von dem ersten Netzwerkanschluss (PORT1) empfangene erste Leistungssignal (PoE+) nach dem zweiten Zeitpunkt über das erste Relais (RL1), das zweite Relais (RL2) und den ersten Netzwerktransformator (TR1) weiter an die PoE-Schaltung (320) übertragen wird, so dass die PoE-Schaltung (320) das zweite Leistungssignal (PoE-) entsprechend liefert; und
das zweite Leistungssignal (PoE-) nach dem zweiten Zeitpunkt über den zweiten Netzwerktransformator (TR2), das dritte Relais (RL3) und das vierte Relais (RL4) an den ersten Netzwerkanschluss (PORT1) übertragen wird.

6. Netzwerkvorrichtung (300) nach einem der Ansprüche 1-5, welche ferner umfasst:
einen zweiten Netzwerkanschluss (PORT2), der einen fünften Stift (P1'), einen sechsten Stift (P2'), einen siebten Stift (P3') und einen achten Stift (P4') umfasst;
einen dritten Netzwerktransformator (TR1');
einen vierten Netzwerktransformator (TR2');
ein fünftes Relais (RL1'), das umfasst:
einen ersten Anschluss, der mit dem fünften Stift (P1') gekoppelt ist;
einen zweiten Anschluss, der mit dem dritten Netzwerktransformator (TR1') gekoppelt ist; und
einen dritten Anschluss;
ein sechstes Relais (RL2'), das umfasst:
einen ersten Anschluss, der mit dem sechsten Stift (P2') gekoppelt ist;
einen zweiten Anschluss, der mit dem dritten Netzwerktransformator (TR1') gekoppelt ist; und
einen dritten Anschluss;
ein siebtes Relais (RL3'), das umfasst:
einen ersten Anschluss, der mit dem siebten Stift (P3') gekoppelt ist;
einen zweiten Anschluss, der mit dem vierten Netzwerktransformator (TR2') gekoppelt ist; und
einen dritten Anschluss; und
ein achtes Relais (RL4'), das umfasst:
einen ersten Anschluss, der mit dem achten Stift (P4') gekoppelt ist;
einen zweiten Anschluss, der mit dem vierten Netzwerktransformator (TR2') gekoppelt ist; und
einen dritten Anschluss;
einen ersten Kondensator (C1), der zwischen den dritten Anschluss des ersten Relais (RL1) und den dritten Anschluss des fünften Relais (RL1') gekoppelt ist;
einen zweiten Kondensator (C2), der zwischen den dritten Anschluss des zweiten Relais (RL2) und den dritten Anschluss des sechsten Relais (RL2') gekoppelt ist;
einen dritten Kondensator (C3), der zwischen den dritten Anschluss des dritten Relais (RL3) und den dritten Anschluss des siebten Relais (RL3') gekoppelt ist; und
einen vierten Kondensator (C4), der zwischen den dritten Anschluss des vierten Relais (RL4) und den dritten Anschluss des achten Relais (RL4') gekoppelt ist.

7. Netzwerkvorrichtung (300) nach Anspruch 6, wobei
ein erstes Datensignal (DATA _N), das von dem ersten Stift (P1) des ersten Netzwerkanschlusses (PORT1) empfangen wird, sequentiell über den ersten Anschluss des ersten Relais (RLl) an den fünften Stift (P1') des zweiten Netzwerkanschlusses (PORT2), den dritten Anschluss des ersten Relais (RLl), den ersten Kondensator (C1), den dritten Anschluss des fünften Relais (RLl') und den ersten Anschluss des fünften Relais (RLl') übertragen wird, wenn das erste bis vierte Relais (RL1-RL4) im zweiten Zustand sind; und
ein zweites Datensignal (DATA _P), das von dem zweiten Stift (P2) des ersten Netzwerkanschlusses (PORT1) empfangen wird, sequentiell über den ersten Anschluss des zweiten Relais (RL2), den dritten Anschluss des zweiten Relais (RL2), den zweiten Kondensator (C2), den dritten Anschluss des sechsten Relais (RL2') und den ersten Anschluss des sechsten Relais (RL2') an den sechsten Stift (P2') des zweiten Netzwerkanschlusses (PORT2) übertragen wird, wenn das erste bis vierte Relais (RL1-RL4) im zweiten Zustand sind.

8. Netzwerkvorrichtung (300) nach einem der Ansprüche 1-7, welche ferner umfasst:
einen Zeitgeber, der konfiguriert ist, nach Ablauf des Zeitgebers ein *Bypass*-Signal auszugeben, um die Netzwerkvorrichtung (300) anzuweisen, im *Ethernet-Bypass*-Modus zu arbeiten, wobei die Steuerung (310) ferner konfiguriert ist, den Zeitgeber periodisch neu zu starten, um zu verhindern, dass der Zeitgeber abläuft.

## Revendications

1. Dispositif de réseau (300) pour restaurer le fonctionnement de l'alimentation par Ethernet, PoE, comprenant:
un premier port de réseau (PORT1) qui comprend une première broche (P1), une deuxième broche (P2), une troisième broche (P3) et une quatrième broche (P4);
un circuit PoE (320) configuré pour fournir de l'énergie après avoir reçu un premier signal d'alimentation (PoE+) via le premier port de réseau (PORT1) dans un mode de contournement *Ethernet* dans lequel un chemin de transmission pour les signaux de données est fourni entre le premier port de réseau (PORT1) et un autre port de réseau indépendant lorsqu'aucune alimentation n'est fournie au dispositif de réseau (300);
un premier transformateur de réseau (TR1);
un deuxième transformateur de réseau (TR2);
un premier relais (RL1) couplé au premier transformateur de réseau (TR1) et au premier port de réseau (PORT1), et comprenant:
une première borne couplée à la première broche (P1);
une deuxième borne couplée au premier transformateur de réseau (TR1); et
une troisième borne;
un deuxième relais (RL2) couplé au premier transformateur de réseau (TR1) et au premier port de réseau (PORT1), et comprenant:
une première borne couplée à la deuxième broche (P2);
une deuxième borne couplée au premier transformateur de réseau (TR1); et
une troisième borne;
un troisième relais (RL3) couplé au deuxième transformateur de réseau (TR2) et au premier port de réseau (PORT1), et comprenant:
une première borne couplée à la troisième broche (P3);
une deuxième borne couplée au deuxième transformateur de réseau (TR2); et
une troisième borne; et
un quatrième relais (RL4) couplé au deuxième transformateur de réseau (TR2) et au premier port de réseau (PORT1), et comprenant:
une première borne couplée à la quatrième broche (P4);
une deuxième borne couplée au deuxième transformateur de réseau (TR2); et
une troisième borne;
un premier inducteur (L1) couplé au premier relais (RL1) et au circuit PoE (320) et configuré pour transmettre le premier signal d'alimentation (PoE+) reçu par le premier port de réseau (PORT1) au circuit PoE (320);
un deuxième inducteur (L2) couplé au deuxième relais (RL2) et au circuit PoE (320) et configuré pour transmettre le premier signal d'alimentation (PoE+) reçu par le premier port de réseau (PORT1) au circuit PoE (320);
un troisième inducteur (L3) couplé au troisième relais (RL3) et au circuit PoE (320) et configuré pour transmettre un deuxième signal d'alimentation (PoE-) fourni par le circuit PoE (320) au premier port de réseau (PORT1);
un quatrième inducteur (L4) couplé au quatrième relais (RL4) et au circuit PoE (320) et configuré pour transmettre le deuxième signal d'alimentation (PoE-) fourni par le circuit PoE (320) au premier port de réseau (PORT1); et
un contrôleur (310) configuré pour commuter les états opérationnels du premier au quatrième relais (RL1-RL4) lorsqu'il est alimenté par le circuit PoE (320) en mode de contournement *Ethernet,* dans lequel, après que le premier signal d'alimentation (PoE+) reçu par le premier port de réseau (PORT1) est transmis au circuit PoE (320) via le premier inducteur (L1) et le deuxième inducteur (L2) lorsque les premier à quatrième relais (RL1-RL4) sont dans le deuxième état de sorte que le circuit PoE (320) commence à alimenter le contrôleur (310), le contrôleur (310) est en outre configuré pour:
émettre un premier signal de commande (S1) au premier relais (RL1) à un premier moment pour commuter le premier relais (RL1) au premier état;
émettre le premier signal de commande (S1) au troisième relais (RL3) au premier moment pour commuter le troisième relais (RL3) au premier état;
émettre un deuxième signal de commande (S2) au deuxième relais (RL2) à un deuxième moment pour la commutation du deuxième relais (RL2) au premier état; et
émettre le deuxième signal de commande (S2) au quatrième relais (RL4) au deuxième moment pour la commutation du quatrième relais (RL4) au premier état, le deuxième moment se produisant après le premier moment.

2. Dispositif de réseau (300) de la revendication 1, dans lequel
le contrôleur (110, 310) est en outre configuré pour émettre un premier signal de commande (S1) au premier relais (RL1) et au troisième relais (RL3) et émettre un deuxième signal de commande (S2) au deuxième relais (RL2) et au quatrième relais (RL4) lorsqu'il est alimenté par le circuit PoE (320) en mode de contournement *Ethernet*;
le premier relais (RL1) est configuré pour:
fonctionner dans un premier état lorsqu'il reçoit le premier signal de commande (S1) de manière à coupler la première extrémité du premier relais (RL1) à la deuxième extrémité du premier relais (RL1); et
fonctionner dans un deuxième état lorsqu'il ne reçoit pas le premier signal de commande (S1) de manière à coupler la première extrémité du premier relais (RL1) à la troisième extrémité du premier relais (RL1);
le deuxième relais (RL2) est configuré pour:
fonctionner dans le premier état lorsqu'il reçoit le deuxième signal de commande (S2) de manière à coupler la première extrémité du deuxième relais (RL2) à la deuxième extrémité du deuxième relais (RL2); et
fonctionner dans le deuxième état lorsqu'il ne reçoit pas le deuxième signal de commande (S2) de manière à coupler la première extrémité du deuxième relais (RL2) à la troisième extrémité du deuxième relais (RL2);
le troisième relais (RL3) est configuré pour:
fonctionner dans le premier état lorsqu'il reçoit le premier signal de commande (S1) de manière à coupler la première extrémité du troisième relais (RL3) à la deuxième extrémité du troisième relais (RL3); et
fonctionner dans le deuxième état lorsqu'il ne reçoit pas le premier signal de commande (S1) de manière à coupler la première extrémité du troisième relais (RL3) à la troisième extrémité du troisième relais (RL3);
le quatrième relais (RL4) est configuré pour:
fonctionner dans le premier état lorsqu'il reçoit le deuxième signal de commande (S2) de manière à coupler la première extrémité du quatrième relais (RL4) à la deuxième extrémité du quatrième relais (RL4); et
fonctionner dans le deuxième état lorsqu'il ne reçoit pas le deuxième signal de commande (S2) de manière à coupler la première extrémité du quatrième relais (RL4) à la troisième extrémité du quatrième relais (RL4); et
le premier relais (RL1), le deuxième relais (RL2), le troisième relais (RL3) et le quatrième relais (RL4) sont configurés pour fonctionner dans le deuxième état en mode de contournement *Ethernet.*

3. Dispositif de réseau (300) de l'une des revendications 1-2, dans lequel
le premier inducteur (L1) comprend:
une première extrémité couplée à la troisième borne du premier relais (RL1); et
une deuxième extrémité couplée au circuit PoE (320);
le deuxième inducteur (L2) comprend:
une première extrémité couplée à la troisième borne du deuxième relais (RL2); et
une deuxième extrémité couplée au circuit PoE (320);
le troisième inducteur (L3) comprend:
une première extrémité couplée à la troisième borne du troisième relais (RL3); et
une deuxième extrémité couplée au circuit PoE (320); et
le quatrième inducteur (L4) comprend:
une première extrémité couplée à la troisième borne du quatrième relais (RL4); et
une deuxième extrémité couplée au circuit PoE (320).

4. Dispositif de réseau (300) de la revendication 1, dans lequel
le premier signal d'alimentation (PoE+) reçu par le premier port de réseau (PORT1) est transmis au circuit PoE (320) séquentiellement via la première borne du premier relais (RL1), la deuxième borne du premier relais (RL1) et le premier transformateur de réseau (TR1) entre le premier point temporel et le deuxième point temporel de sorte que le circuit PoE (320) fournisse le deuxième signal d'alimentation (PoE-) en conséquence; et
le deuxième signal d'alimentation (PoE-) est transmis à la troisième broche (P3) du premier port de réseau (PORT1) séquentiellement via le deuxième transformateur de réseau (TR2), la deuxième borne du troisième relais (RL3) et la première borne du troisième relais (RL3) entre le premier et le deuxième point dans le temps.

5. Dispositif de réseau (300) de la revendication 4, dans lequel
le premier signal d'alimentation (PoE+) reçu par le premier port de réseau (PORT1) est transmis au circuit PoE (320) via le premier relais (RL1), le deuxième relais (RL2) et le premier transformateur de réseau (TR1) après le deuxième point temporel afin que le circuit PoE (320) fournisse le deuxième signal d'alimentation (PoE-) en conséquence; et
le deuxième signal d'alimentation (PoE-) est transmis au premier port de réseau (PORT1) via le deuxième transformateur de réseau (TR2), le troisième relais (RL3) et le quatrième relais (RL4) après le deuxième point de temps.

6. Dispositif de réseau (300) de l'une des revendications 1 à 5, comprenant en outre:
un deuxième port de réseau (PORT2) qui comprend une cinquième broche (P1'), une sixième broche (P2'), une septième broche (P3') et une huitième broche (P4');
un troisième transformateur de réseau (TR1');
un quatrième transformateur de réseau (TR2');
un cinquième relais (RL1') comprenant:
une première borne couplée à la cinquième broche (P1');
une deuxième borne couplée au troisième transformateur de réseau (TR1'); et
une troisième borne;
un sixième relais (RL2') comprenant:
une première borne couplée à la sixième broche (P2');
une deuxième borne couplée au troisième transformateur de réseau (TR1'); et
une troisième borne;
un septième relais (RL3') comprenant:
une première borne couplée à la septième broche (P3');
une deuxième borne couplée au quatrième transformateur de réseau (TR2'); et
une troisième borne; et
un huitième relais (RL4') comprenant:
une première borne couplée à la huitième broche (P4');
une deuxième borne couplée au quatrième transformateur de réseau (TR2'); et
une troisième borne;
un premier condensateur (C1) couplé entre la troisième borne du premier relais (RL1) et la troisième borne du cinquième relais (RL1');
un deuxième condensateur (C2) couplé entre la troisième borne du deuxième relais (RL2) et la troisième borne du sixième relais (RL2');
un troisième condensateur (C3) couplé entre la troisième borne du troisième relais (RL3) et la troisième borne du septième relais (RL3'); et
un quatrième condensateur (C4) couplé entre la troisième borne du quatrième relais (RL4) et la troisième borne du huitième relais (RL4').

7. Dispositif de réseau (300) de la revendication 6, dans lequel
un premier signal de données (DATA_N) reçu par la première broche (P1) du premier port de réseau (PORT1) est transmis à la cinquième broche (P1') du deuxième port de réseau (PORT2) séquentiellement via la première borne du premier relais (RLl), la troisième borne du premier relais (RLl), le premier condensateur (C1), la troisième borne du cinquième relais (RLl') et la première borne du cinquième relais (RLl') lorsque le premier au quatrième relais (RL1-RL4) sont dans le deuxième état; et
un deuxième signal de données (DATA_P) reçu par la deuxième broche (P2) du premier port de réseau (PORT1) est transmis à la sixième broche (P2') du deuxième port de réseau (PORT2) séquentiellement via la première borne du deuxième relais (RL2), la troisième borne du deuxième relais (RL2), le deuxième condensateur (C2), la troisième borne du sixième relais (RL2') et la première borne du sixième relais (RL2') lorsque le premier au quatrième relais (RL1-RL4) sont dans le deuxième état.

8. Dispositif de réseau (300) de l'une des revendications 1 à 7, comprenant en outre:
une minuterie configurée pour émettre un signal de contournement après l'expiration de la minuterie afin d'ordonner au dispositif de réseau (300) de fonctionner en mode de contournement *Ethernet,* dans lequel le contrôleur (310) est en outre configuré pour redémarrer périodiquement la minuterie afin d'empêcher la minuterie d'expirer.
